# EUROPEAN PATENT SPECIFICATION

(11) **EP 3 736 708 B1**
(45) Date of publication and mention of the grant of the patent: **26.08.2026**
(21) Application number: 19173245.2
(22) Date of filing: 08.05.2019
(51) Int. Cl.: G06F 16/29, G09B 29/00, G01S 5/02

(54) **TRANSFORMING RADIO MAP BASED POSITION ESTIMATES FOR USE WITH GEOGRAPHIC MAP**
TRANSFORMATION VON POSITIONSSCHÄTZUNGEN BASIEREND AUF FUNKKARTEN ZUR VERWENDUNG MIT EINER GEOGRAFISCHEN KARTE
TRANSFORMATION D'ESTIMATIONS DE POSITION À BASE DE CARTE RADIO À UTILISER AVEC UNE CARTE GÉOGRAPHIQUE

(43) Date of publication of application: 11.11.2020
(73) Proprietor: HERE Global B.V., 5611 ZT Eindhoven (NL)
(72) Inventor: NURMINEN, Henri Jaakko Julius, 33100 Tampere (FI); IVANOV, Pavel, 33100 Tampere (FI); WIROLA, Lauri Aarne Johannes, 33100 Tampere (FI)
(74) Representative: Sariot, Eray

(56) References cited:
- AU-A1- 2014 250 652
- US-A1- 2014 141 803
- US-A1- 2015 212 192
- US-A1- 2015 230 100

## Description

### FIELD OF THE INVENTION

The invention relates to positioning, in particular indoor positioning, and to using position estimates with geographic maps by determining a transformation based on common features present in both maps.

### BACKGROUND OF THE INVENTION

Indoor positioning requires novel systems and solutions that are specifically developed and deployed for this purpose. The "traditional" positioning technologies, which are mainly used outdoors, i.e. satellite and cellular positioning technologies, cannot deliver such performance indoors that would enable seamless and equal navigation experience in both environments. The required positioning accuracy (2-3 m), coverage (~100%) and floor detection are challenging to achieve with satisfactory performance levels with the systems and signals that were not designed and specified for the indoor use cases in the first place. Satellite-based radio navigation signals simply do not penetrate through the walls and roofs for the adequate signal reception and the cellular signals have too narrow bandwidth for accurate ranging by default.

Several indoor-dedicated solutions have already been developed and commercially deployed during the past years e.g. solutions based on technologies like pseudolites (OPS-like short-range beacons), ultra-sound positioning, Bluetooth or Bluetooth LE signals and Wi-Fi fingerprinting. What is typical to these solutions is that they require either deployment of totally new infrastructure (such as beacons or tags) or manual exhaustive radiosurveying of the buildings including all the floors, spaces and rooms. This is rather expensive and will take a considerable amount of time to build the coverage to the commercially expected level, which can in some cases narrow the potential market segment to only a very thin customer base e.g. for health care or dedicated enterprise solutions. Also, the diversity of these technologies makes it difficult to build a globally scalable indoor positioning solution, and the integration and testing will become complex if a large number of technologies needs to be supported in the consumer devices, such as smartphones.

For an indoor positioning solution to be commercially successful it needs to be globally scalable, have low maintenance and deployment costs, and offer acceptable end-user experience. This can best be achieved, if the solution is based on an existing infrastructure in the buildings and on existing capabilities in the consumer devices. Accordingly, the indoor positioning needs to be based on technologies like Wi-Fi- and/or Bluetooth (BT)-technologies that are already supported in almost every smartphone, tablet, laptop and even in the majority of the feature phones. It is, thus, required to find a solution that uses such radio signals in such a way that makes it possible to achieve 2-3 m horizontal positioning accuracy, close to 100% floor detection with the ability to quickly build the global coverage for this approach.

One approach for radio-based indoor positioning models the radio environment (generated by e.g. Wi-Fi, Bluetooth or any similar radio signals) from observed radio measurements (e.g. received signal strength (RSS)-measurements) as 2-dimensional radio maps and is hereby able to capture the dynamics of the indoor radio propagation environment in a compressible and highly accurate way. This makes it possible to achieve unprecedented horizontal positioning accuracy with the radio signals only within the coverage of the created radio maps and also gives highly reliable floor detection.

Alternatively or in addition to the above described approach of manually radio surveying a region, huge volumes of indoor radio signal measurement data (so called fingerprints) can be harvested via the approach of crowdsourcing, if the consumer devices are equipped with the necessary functionality to enable the radio signal data collection, e.g. as an automatic background process, naturally with the end-user consent. It could also be possible to use volunteers to survey the sites (buildings) in exchange of reward or recognition and get the coverage climbing up globally in the places and venues important for the key customers. However, the technical challenges related to the harvesting, processing, redundancy, ambiguity and storing the crowd-sourced data need to be understood and solved first, before the radio map creation can be based on the fully crowdsourced data.

Implicitly or explicitly, the radio map must be based on some coordinate system in which a geographic position is expressed. Typically, the coordinate system used in the radio map will depend on the method with which the radio map was created and the radio data was collected.

In the training stage, in case of manually collected data, a geo-reference or position fix for the radio measurement used for generating the radio map is normally given manually by inputting the position of the measurement on a geographic map (e.g. an indoor map). This is done e.g. by tapping a mobile device's touch screen that displays the geographic map. With this method, the radio map will be based on the coordinate system of the map displayed to the user during data collection in the training stage. In this case, the coordinates are often in the format ("east", "north", "floor") or ("latitude", "longitude", "floor").

In case of crowd-sourced data, a geo-reference is typically obtained automatically using various measurement sensors of mobile devices. With this method, the absolute coordinate information usually originates from global navigation satellite systems (GNSS) such as the GPS. GNSS receivers return the position estimate in some global coordinate system, such as the WGS84 coordinate system. The radio map will then be based on the WGS84 system (or on another system with a known transformation to/from WGS84). The WGS84 system uses the format ("latitude", "longitude", "altitude").

The radio map is typically used only for the purpose of calculating the position estimate but not for presenting the result to the user. That is, in the positioning stage a mobile device takes measurements of its radio environment and the measurements are then compared with the radio map, so that a position estimate of the mobile device can be derived from this. However, since the radio map primarily comprises data on the radio environment, a further geographic map is typically used for eventually presenting the determined position estimate (visually) to a user.

This is particularly the case for indoor positioning, which makes sense only when it is used with an indoor map, on which the position estimate can be shown. Typically the quality of the user experience is not primarily determined by the accuracy of the position estimate through the radio map, but mostly by how well the estimated position matches with reality when displayed in the geographic map.

A radio map cannot straightforwardly be used with a geographic map, in case the geographic map designated to be used for displaying the result uses a coordinate system different from that of the radio map. Such situation may in particular arise due to the following reasons. In one case, the geographic map may simply be designed to use a different coordinate system, so that the coordinate systems of the radio map and the indoor map already differ by design. Additionally or alternatively, the indoor map may be aligned inaccurately. For instance, many geographic maps nominally use the WGS-84 as reference system at least in horizontal coordinates (i.e. for "lat", "lon"), but in reality the geographic map has a non-identity translation, scaling, and rotation with respect to an accurate coordinate system using WGS-84.

Additionally, it may be the case that for a certain region, there are different geographic maps available provided by different map providers, which typically also differ from each other, also with respect to the coordinate system used.

Thus, in view of the above it is inter alia an object of the invention to provide methods and apparatuses for an improved positioning experience, when a radio map and a geographic map are used. Specifically, this shall also be achieved in case a radio map is used in combination with different geographic maps.

US 2014/0141803 A1 describes handling and tiling of indoor map data and converting positions between local tile coordinates and a global venue coordinate frame, but does not disclose deriving a transformation between a radio-map coordinate system and a geographic-map coordinate system.

AU 2014250652 A1 relates to providing indoor context information, such as access-point locations, to facilitate indoor positioning, yet it does not address determining a transformation between the coordinate systems of different maps.

US 2015/0212192 A1 concerns correcting georeference errors in crowdsourced positioning data and estimating distortions or systematic offsets, but does not derive a transformation based on features shared between a radio map and a geographic map.

US 2015/0230100 A1 discloses WLAN-based indoor positioning and mentions conversions between different local coordinate systems; however, it does not identify common features present in both a radio map and a geographic map to determine a transformation for applying to the calculated position estimate.

### EXAMPLE EMBODIMENTS OF THE INVENTION

The invention is set forth in the independent claims.

According to independent claim 1, a method, performed by at least one apparatus, is disclosed, the method comprising:
- determining a position estimate of a mobile device in a region, the region being covered by a radio map and a geographic map, the position estimate being determined based on the radio map and one or more radio measurements taken by the mobile device;
characterized in that the method further comprises:
- determining a transformation for applying to the position estimate, wherein the determining of the transformation comprises identifying a common feature present in the radio map and the geographic map and utilizing position information of the common feature for determining the transformation, and
- applying the determined transformation to the position estimate, the transformation transforming coordinates in a coordinate system of the radio map into coordinates in a coordinate system of the geographic map.

According to independent claim 17, an apparatus is disclosed comprising means for performing a method according to any exemplary aspect. The means of the apparatus may be implemented in hardware and/or software. They may comprise for instance at least one processor for executing computer program code for realizing the required functions, at least one memory storing the program code, or both. Alternatively, they could comprise for instance circuitry that is designed to realize the required functions, for instance implemented in a chipset or a chip, like an integrated circuit. In general, the means may comprise for instance one or more processing means such as a processor and a memory. Optionally, the apparatus may comprise various other components, like a communication interface, a network interface, a radio interface, a data interface, a user interface etc. For instance, the apparatus may comprise at least one processor and at least one memory including computer program code; the at least one memory and the computer program code configured to, with the at least one processor, cause the apparatus to at least perform a method according to any exemplary aspect of the invention.

The disclosed apparatuses according to any aspect of the invention may be a module or a component for a device, for example a chip. Alternatively, the disclosed apparatus according to any aspect of the invention may be a device, for instance a mobile device or a server. The disclosed apparatus according to any aspect of the invention may comprise only the disclosed components, for instance means, processor, memory, or may further comprise one or more additional components.

According to independent claim 18, a computer program code is disclosed, the computer program code, when executed by a processor, causing an apparatus to perform a method according to any exemplary aspect. The computer program may be stored on a computer-readable storage medium, in particular a tangible and/or non-transitory medium. The computer readable storage medium could for example be a disk or a memory or the like. The computer program could be stored in the computer readable storage medium (e.g. according to the exemplary aspect of the invention described below) in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to independent claim 19, a non-transitory computer readable storage medium is disclosed, in which computer program code is stored, the computer program code when executed by a processor causing at least one apparatus to perform a method according to any exemplary aspect. The storage medium may be a tangible storage medium, for example a tangible computer-readable storage medium. The storage medium may be a storage medium of a mobile device or server, for example an apparatus according to the exemplary aspects of the invention.

In the following, exemplary features and exemplary embodiments of all aspects of the present invention will be described in further detail.

Generally, a coordinate system may in particular be a geographic coordinate system enabling every location in a region or on Earth to be specified by a set of numbers, letters and/or symbols.

Since the position estimate is determined based on the radio map, the position estimate typically indicates a geographic position with respect to the coordinate system of the radio map. The coordinate system of the radio map in turn typically depends on how the radio map was generated. As explained before, specifically in the case of a crowd-sourced data source for generating the radio map (but also in some other but not all cases), the radio map typically uses a global coordinate system.

In general, a radio map may be understood as a collection of radio models or radio images of radio nodes (e.g. access points) within a region. A radio map may in some examples include exact location information of respective nodes. In other examples, the location information may be less specific and may, for instance, only indicate a coverage area of a respective node. As such, the location information in a radio map may be, broadly-speaking, described as a geographical reference for each node or the radio environment in a certain region in general.

For indicating a geographic position, the position estimate may in particular comprise one or more of the following information: horizontal position information; vertical position information; information representative of a latitude; information representative of a longitude; information representative of an altitude. Therein, latitude and longitude are examples of horizontal position information. The horizontal position information may indicate an absolute position (such as longitude and latitude) or a relative position (e.g. with reference to a local map). An altitude is an example of vertical position information. An altitude may be an absolute altitude (e.g. above a reference ellipsoid (e.g. WGS-84) or above mean see level) or a relative altitude (e.g. above ground). Another example of vertical position information is the floor index of a building, which may be considered as a relative altitude with respect to the ground floor of the building.

The region is also covered by a geographic map. However, the radio map and the geographic map do not necessarily need to cover the whole region in each case. The radio map and/or the geographic map may as well only cover a part of the region, for instance. However, the radio map and the geographic map overlap to some degree.

In contrast to a radio map (which represents the radio environment or certain features thereof), a geographic map is understood to be a map which represents geographical and/or structural features, such mountains or infrastructure (e.g. roads, bridges), buildings or other structures. In contrast to a radio map, a geographic map may thus in particular not comprise information about the radio environment. The term geographical map is understood to cover both outdoor and indoor maps. Thus, a geographical map may also represent (or be limited to) a single structure, such as a building or a certain section (e.g. a floor) thereof. A structure may in particular have an indoor area and/or multiple floors. Non-limiting examples of a structure are a building, a part of a building, a tower, a mall, on office building, a house, a public building, a hospital or the like.

In case of a plurality of geographic maps, these maps may or may not cover the whole region individually or together. The coverage of the plurality of geographic maps may or may not overlap. In one example, the geographical maps may be geographical maps of different providers covering the same building or even the same floor of a building. In another example, the different geographic maps may cover different parts of the region, which may be covered by a single radio map.

Generally, a transformation or coordinate transformation between coordinate systems may comprise mathematical rules, which can be applied to coordinates in order to transform coordinates from one system to another system. A transformation may comprise translation, rotation, shearing and/or scaling operations, for instance. A transformation may be described with a transformation matrix, for instance. Thus a transformation may in particular comprise one or more appropriate transformation operations, e.g. one or more transformation matrices.

Applying the transformation transforms coordinates in a coordinate system of the radio map (input of transformation) into coordinates in a coordinate system of the geographic map (output of transformation). After applying the transformation to the determined position estimate (which indicates a geographic position in coordinates with respect a coordinate system of the radio map), the transformed position estimate indicates the geographic position in coordinates with respect to a coordinate system of the geographic map.

Thus, the transformation is in particular specific to the geographic map and/or to the radio map. In case a different radio map or a different geographic map is used, the transformation will typically be different. However, it may also be the case that the transformation is specific to multiple geographic maps (e.g. to multiple maps of a certain provider and/or to multiple maps of a certain building).

According to the suggested approach, the radio map can therefore straightforwardly be used with a geographic map that uses a coordinate system different from that of the radio map. As already explained, this problem can arise, for example, because the geographic map was simply designed to use a different coordinate system or because the geographic map is aligned inaccurately. For instance, many geographic maps (e.g. indoor maps) nominally use the WGS-84 as reference system at least in horizontal coordinates (i.e. for "lat", "lon"), but in reality the geographic map has a non-identity transformation (e.g. translation, scaling and/or rotation) with respect to an accurate coordinate system using WGS-84. Thus, even though both the radio map and the geographic map are designed to use the same reference system and it may seem that they thus use the same coordinate system, they actually use different coordinate systems being associated with a non-identity transformation.

The approach described herein has the advantage, that even if there is discrepancy between the coordinate system of the radio map and of the geographic map the positioning system's positioning accuracy and user experience does not degrade.

In the present approach, the transformation is applied to the position estimate. This has the advantage that the radio map can be used with different geographic maps and that a geographic map can be used with different radio maps. If a transformation was e.g. applied directly to the radio map transforming the radio map as such in order to align the different coordinate systems, the radio map could potentially not be used with another geographic map anymore. Likewise, if a transformation was e.g. applied directly to the geographic map transforming the geographic map as such in order to align the different coordinate systems, the geographic map could potentially not be used with another radio map anymore.

In the suggested approach, a single (in particular crowd-sourced) radio map can be used for positioning with respect to differing geographic maps (e.g. of different map providers) covering the same region (e.g. the same building). In other word, the differences with respect to the coordinate system between the radio map and different geographic maps can be compensated by identifying the coordinate transformation between the coordinate systems of the radio map on the one hand and a respective geographic map on the other hand.

While the first exemplary method focuses on the positioning stage, in which a radio map and a specific geographic map are utilized, the second exemplary method focuses on the determination of a plurality of transformations, which may then be applied to a position estimate as described in the first exemplary method. Thus, the second exemplary method may in particularly be performed by a server before any position needs to be done, while the first method may in particularly be performed by the mobile device and/or a server during the positioning stage. For instance, one of the transformations of the plurality of transformations determined by the second exemplary method may be provided and then applied to the position estimate as described in the first exemplary method.

According to an exemplary embodiment of the different aspects of the invention, the method further comprises:
- providing the transformed position estimate for outputting with respect to the geographic map; and/or
- outputting the transformed position estimate with respect to the geographic map.

For instance, the transformed position estimate may be provided by a server to the mobile device, the position of which has been determined. The mobile device may then output the transformed position estimate with respect to the geographic map. For instance, the transformed position estimate may be visually output and presented to the user. For this, the geographic map (or a part thereof) may be present to the user on a display. The transformed position estimate may then be output on the displayed geographic map.

In case a different geographic map is used for outputting the position estimate (e.g. because the user or the mobile device has selected a different geographic map), the originally determined position estimate can simply be transformed with a transformation for this now selected different geographic map.

According to an exemplary embodiment of the different aspects of the invention, the method further comprises:
- observing radio signals in the environment of the mobile device and taking one or more radio measurements.

The radio measurements of the observed radio signals taken in the region, which is also covered by the radio map, can be used in combination with the radio map to determine the position estimate. Nevertheless, other positioning techniques may be used in addition. For instance, indoors a (weak or past) GNSS signal may be used for a coarse first estimate of the position and the radio measurements may then be used for a more precise determination of the position estimate.

Such radio measurements may in particular each comprise one or more of the following information:
- an identifier of a radio node emitting an observed radio signal;
- information on a received signal strength of an observed radio signal;
- information on path losses of an observed radio signal;
- information on a timing measurement of an observed radio signal; and/or
- information on an angle of arrival of an observed radio signal.

Such information may also be provided by the radio map, so that a comparison of the observed signals and radio map can provide a position estimate.

Generally, the radio measurements may be based on radio signals of a cellular communication system or a non-cellular communication system. Examples of a cellular communication system are a second generation (2G, for instance the Global System for Mobile Communication (GSM), the General Packet Radio System (GPRS), the Enhanced Data Rates for GSM Evolution (EDGE) or the High Speed Circuit-Switched Data (HSCSD)), third generation (3G, for instance the Universal Mobile Telecommunication System, UMTS, WCDMA, TD-SCDMA or CDMA-2000), fourth generation (4G, for instance the Long Term Evolution, LTE system, the LTE Advanced (LTE-A) system or the IEEE 802.16m WiMAX system) or fifth generation (5G) communication system. Examples of a non-cellular communication system are a system according to the IEEE 802.11 standard (WLAN system), a Bluetooth or Bluetooth LE system, a ZigBee system, a radio-frequency identification (RFID) system, a broadcasting network such as for instance Digital Video Broadcasting (DVB), Digital Audio Broadcasting (DAB) or Frequency-Modulated (FM) / Amplitude-Modulated (AM) system, a Near Field Communication (NFC) system, etc.

A cellular communication system may for instance be characterized by a basically seamless pavement of a geographical area (usually in the order of at least hundreds or thousands of square kilometers) with cells in which coverage is provided by respective nodes of the communication system that are operated by the same operator, which network may for instance support communication handover between cells. Consequently, a non-cellular communication system may be characterized as a communication system that does not have all of these properties.

Accordingly, an identifier of a radio node may for instance be a cell identifier in case of a cellular communication system (e.g. UTRAN Cell ID (UC-ID) or an LTE Cell Identity), or a service set identifier (e.g. an SSID or BSSID) or a medium access control (MAC) address in case of a non-cellular communication system. Accordingly, a radio node may be a cellular radio node or an access point or a Bluetooth beacon, for example.

Information on a received signal strength may for instance be a received signal strength indication RSSI or physical Rx level. Information on path losses may be a path loss exponent, for instance. Information on a timing measurement may comprise information representative of a propagation delay, a timing advance (TA) or round-trip time (RTT). Information on an angle of arrival (AoA) of an observed radio signal may be obtained via the time difference of arrival (TDOA), for instance.

Many of these signals may in particular be observed indoors (compared to GNSS signals, for instance), so that these signals allow for the described approach to be used for indoor positioning in particular.

According to an exemplary embodiment of the different aspects of the invention, the radio map is at least in part based on manually collected radio fingerprints and/or at least in part based on crowdsourced radio fingerprints.

A radio fingerprint is understood to at least comprise a radio measurement and geo-reference or position fix indicating the geographic position at which the associated radio measurement was taken. The position estimate indicates a geographic position with respect to a certain coordinate system, which will then typically become the coordinate system of the radio map generated from these radio fingerprints, as already explained earlier.

A manual data collection of the radio fingerprints is in particular understood as a collection which involves at least a manual input of a user. Accordingly, manually collected data is in particular understood as data, the collection of which comprises at least a manual input of a user (e.g. during the collection). For instance, a manual data collection comprises a human-in-the-loop (HITL). Specifically with respect to a radio map, a manual user input may in particular be required for manually inputting position information for the collection of radio fingerprints. Manually collected data may further have the property of a data that is purposefully, selectively and/or systematically collected. Also, manually collected data may be more accurate than crowdsourced data.

A data collection by means of crowdsourcing is in particular understood as a collection which is performed by a large group of users (such as thousands, hundred thousands, millions of users/devices or even more). The collection may in particular be performed automatically and a manual input of a user may not be required. Specifically with respect to a radio map, the position information for the collection of radio fingerprints may in particular be collected automatically without any manual user input. Crowdsourced data may further have the property of a data that is collected randomly, aimlessly and/or by chance. Also, crowdsourced data may be noisier than manually collected data.

According to an exemplary embodiment of the different aspects of the invention, the coordinate system of the radio map and of the geographic map use the same or a different reference system.

While the coordinate system of the radio map and of the geographic map may use or indicate positions with respect to different references or different reference systems, they may also use or indicate positions with respect to the same reference or reference system. For instance, both coordinate systems may reference or use global coordinates, e.g. used by a GNSS. Still, also in the latter case, the two coordinate systems may be misaligned with respect to each other and a coordinate transformation of a position estimate determined based on the radio map may be needed in order to precisely output the position estimate with respect to the geographic map.

The coordinate systems may also only partially use the same reference system. For instance, the coordinate system of the radio map and of the geographic map may use the same reference system with respect to the horizontal coordinates (e.g. "latitude", "longitude"). However, with respect to the vertical coordinate the coordinate system of the radio map may use an absolute altitude value, while the coordinate system of the geographic map (e.g. in case of an indoor map) may use a floor index.

According to an exemplary embodiment of the different aspects of the invention, the coordinate system of the radio map and/or of the geographic map uses global coordinates.

The radio map may indicate positions with respect to global coordinates (e.g. of a global geographic coordinate system, e.g. with reference to a reference ellipsoid, such as defined by WGS-84). This may be due to the fact that the collected radio fingerprints used for generating the radio map may already use these global coordinates for indicating position fixes. The geographic map may also indicate positions with respect to global coordinates (e.g. of a global geographic coordinate system, e.g. with reference to a reference ellipsoid, such as defined by WGS-84). As already explained, it may also be the case that the coordinate system of the radio map and the geographic map use a different reference system, e.g. global coordinates in one case and local coordinates in the other case. As already explained as well, it may be the case that the horizontal coordinates are global coordinates, while the vertical coordinates (in particular of the geographic map in case of an indoor map) are local coordinates (e.g. a floor index).

According to an exemplary embodiment of the different aspects of the invention, the method further comprises:
- determining the transformation for applying to the position estimate.

The transformation may be determined in offline and/or background processes at a server. When the transformation is needed for transforming a position estimate during a positioning process, the respective transformation can be obtained or fetched from the server.

It may be intended to use the radio map with a plurality of geographic maps. Thus, a transformation for a plurality of geographic maps may be determined and e.g. stored for later use in a database associated with the respective geographical map. However, it may also be possible, that a certain transformation is applicable for a plurality of geographic maps, e.g. for all maps of a certain provider and/or for all maps of a certain structure. Specifically, a dedicated transformation may be determined for each of the plurality of geographic maps, wherein a respective transformation transforms coordinates in a coordinate system of the radio map into coordinates in a coordinate system of a respective geographic map of the plurality of geographic maps, as also described with respect to the second method.

As will be described in more detail below, the transformation between the coordinate systems may be determined by finding a transformation which optimally maps a common feature of the two maps from the radio map to the geographic map.

According to an exemplary embodiment of the different aspects of the invention, the determining of the transformation comprises identifying a common feature present in the radio map and the geographic map and utilizing position information of the common feature in the radio map on the one hand and in the geographic map on the other hand for determining the transformation.

A common feature may in particular be a pattern, a distribution, a characteristic and/or a property present in both the radio map and the geographic map. The common feature may in particular be such that a one or more corresponding geographic areas or points (also referred to as "shared points") may be identified in the radio map on the one hand and in the geographic map on the other hand. More generally, the common feature may be such that it facilitates identifying the transformation (e.g. a relative displacement, shearing, rotation and/or scaling of first and second coordinate system with respect to each other). In order to further improve the determination of the transformation multiple common features may also be identified for determining the transformation. Examples of such common features are provided in the following. With respect to the radio map, the common feature may be derived from the radio map itself or from data (e.g. radio fingerprints) used for generating the radio map, for instance.

According to an exemplary embodiment of the different aspects of the invention, the common feature pertains to one or more of:
- a geometric feature, in particular a shape, of a structure in the region;
- a place of interest, in particular a place of business, located in the region; and/or
- an access or path feature in a structure in the region.

Typically, the common feature or the position thereof may be directly indicated in the geographic map and also in the radio map. However, it may also be the case that such features may only indirectly be derived from the radio map. As an example, the shape of a building (as an example of a geometric feature of a structure) may be explicitly indicated by and stored within the geometric map, so that it can be easily extracted from the geographic map. However, in the radio map, the shape of a building may need to be estimated or indirectly derived from the radio environment indicated by the radio map, e.g. by taking into account that GNSS signals are weak or not available (if GNSS availability is indicated by the radio map). As another example, a place of interest may be explicitly stored within the geometric map, so that name and geographic position thereof can be easily extracted from the geographic map. However, in the radio map, a place of interest may need to be estimated or indirectly derived from the radio environment indicated by the radio map, e.g. by taking into account the identifiers broadcast by the radio nodes (which may be linked with the name of the place of interest) and the geographic positions of these radio nodes. As yet another example, an access feature (e.g. an entrance) may be explicitly indicated by and stored within the geometric map, so that the geographic position thereof can be easily extracted from the geographic map. However, in the radio map, such features would need to be estimated or indirectly derived from the radio environment indicated by the radio map, e.g. by taking into account the sudden changes of characteristics of the radio environment at entrances.

A respective transformation may be determined, as soon as such shared points to be mapped onto each other can be determined for a respective common feature in both maps.

According to an exemplary embodiment of the different aspects of the invention, the common feature pertains to a shape of a structure in the region and the identifying of a common feature comprises determining the shape of the structure in the radio map and in the geometric map, wherein the position information of the common feature preferably comprises one or more of:
- one or more points of the shape;
- one or more corner points of the shape;
- one or more center points of the shape; and/or
- one or more focus points of a curve, in particular an ellipse, derived from the shape.

The shape of a structure, such as the footprint of a building, may provide distinct points (such as the corner points) which may be identified in both maps with a sufficient certainty.

While the shape of a structure (such as a building) may be stored in the geometric map and is thus directly indicated therein, identifying the shape of a structure from the radio map is more challenging. One option is to use the GNSS availability, because GNSS availability typically implies that the area is outdoor space, while weak or no GNSS availability may indicate indoors space. Another option would be to use floor number matching, since the presence of multiple floors typically indicated an indoor area. Also, the radio node density may be utilized, because the radio node density is typically higher or highest inside a structure (e.g. buildings) compared to an outdoor space. A further option is to identify magnetic field anomalies in the radio map, as these typically appear indoors. Yet another option is to use received signal strength gradients stored or derivable from the radio map, because the signal attenuates drastically at the outer walls of structures. One or more of these approaches allows to derive the shape of a structure (or an estimate thereof) from the radio map as well.

After identifying the shape in the radio map and the geometric map, specific points of the shape (e.g. on the periphery of the shape) may be identified and used as shared points. For instance, corner points of the structure may be identified in both maps. Another example of deriving shared points from the shape of the identified building is the following: The area of the shape of the structure are filled with a grid (e.g. a dense regular grid of e.g. 1m x 1m) for both maps. Then, the sample means and sample covariance matrices of these point sets are computed. Then, the focus points of ellipses corresponding to the means and covariance matrices are determined and the corresponding focus points can eventually be used as shared points. The transformation can then be determined such that the shared points are mapped onto each other.

According to an exemplary embodiment of the different aspects of the invention, the common feature pertains to a place of interest in the region and the identifying of a common feature comprises a matching of one or more radio node identifiers of the radio map with one or more names of places of interest of the geographic map, wherein the position information of the common feature preferably comprises one or more of:
- position information of one or more matching radio nodes in the radio map;
- a mean position of multiple matching radio node in the radio map;
- position information of a matching place of interest in the geographic map; and/or
- a center point of a matching place of interest in the geographic map.

An example of places of interest are the businesses operating in a structure (e.g. an office building or a mall). The common feature can be identified by matching identifiers of radio nodes (e.g. SSIDs or URLs) with the names of the places of interest indicated in the geographic map. For instance, the position of the mean of all those radio node locations with an identifier related to the name of the place of interest in the radio map and the position of the center point of the business area in the geographic map may be considered a shared point to be mapped onto each other when determining the transformation.

According to an exemplary embodiment of the different aspects of the invention, the common feature pertains to an access or path feature in a structure in the region and the identifying of a common feature comprises detecting an access or path feature in the radio map, wherein the access or path feature preferably comprises one or more of:
- a horizontal access feature, in particular an entrance;
- a vertical access feature, in particular an elevator, an escalator or a staircase; and/or
- a corridor feature, in particular a corridor end.

The positions of access features or path features (such as entrances, elevators etc.) are typically directly indicated in geographical maps, such as indoor maps. With respect to radio maps, such features can be detected in the radio map in different ways. For instance, in case of building or space entrances radio fingerprints typically indicate lots of parallel movement (which can be identified e.g. based on the spatial distribution of the fingerprints and/or information on the direction of movement, which may be contained by the fingerprints) and the GNSS availability changes. In case of corridor ends, there is lots of parallel movement as well. In case of vertical access features, such as elevators, escalators, staircases, vertical movement can be detected in the radio fingerprints.

According to an exemplary embodiment of the different aspects of the invention, the transformation includes one or more of the following transformation operations:
- a translation;
- a scaling;
- a shearing;
- a rotation; and/or
- an altitude-floor mapping.

Each of these transformation operations may be a transformation operation regarding horizontal and/or vertical coordinates. In one example, the coordinate transformation from the coordinate system of the radio map to the coordinate system of the geographic map includes translation, scaling, and/or rotation in the horizontal dimensions, and translation, scaling and/or altitude-to-floor-index mapping in the vertical dimension.

According to an exemplary embodiment of the different aspects of the invention, the determining of the transformation comprises a mathematical optimization method. An example of a mathematical optimization method is a least square method. More specifically, such an optimization method may minimize the sum of squared distances from the transformed radio map points to the corresponding geographic map points. Other suitable optimization methods for identifying the transformation may be used as well.

According to an exemplary embodiment of the different aspects of the invention, the determining of the transformation comprises
- discretizing the rotation angle space;
- optimizing the transformation for transformation operations other than rotation for each discrete rotation angle; and
- choosing a rotation angle for the transformation providing an optimized transformation result.

This approach may particularly relate to an efficient determination of the transformation with respect to the horizontal dimension. With respect to the horizontal dimensions, this transformation can be found efficiently with the following method: First, one discretizes the rotation angle space with a predefined angle resolution (e.g. for a resolution of 1° into 0°, 1°, 2°, ..., 359°). Then, one computes the least squares estimate for the translation and scaling for each rotation angle. Since these are linear operations, a linear least squares method can be used. Then, the rotation angle is chosen that provides the smallest sum of squared distances.

According to an exemplary embodiment of the different aspects of the invention, the region is or comprises an indoor and/or outdoor region. For instance, the radio map may cover an outdoor region, an indoor region or both. Also, the geographic map may cover an outdoor region, an indoor region (i.e. the map is an indoor map) or both.

According to an exemplary embodiment of the different aspects of the invention, the region is covered by multiple geographic maps, the method further comprising:
- selecting a transformation for applying to the position estimate from multiple transformations, each of the multiple transformations transforming coordinates in a coordinate system of the radio map into coordinates in a coordinate system of a respective geographic map of the multiple geographic maps.

For instance, the region may be covered by a single radio map and by multiple geographic maps. Therein, the geographic maps may overlap or pertain to separate parts of the region. For instance, the radio map may cover a building, while the different geographic maps may each cover a different floor of the building. Alternatively, the geographic maps may overlap, but originate from different map providers. In all these situations a dedicated transformation is advantageous, if a position estimate for a respective geographic map is to be presented to a user with high precision. The respective transformations may be determined offline, i.e. by a server before the position estimate is determined and supposed to be output. If a position estimate is then determined, a respective transformation is directly available (at the server or it can be fetched by the mobile device from the server, for instance) for outputting the position estimate.

It is noted that all described embodiments and features also apply to a scenario with multiple transformations and each of the multiple transformations may be determined and used as described above.

According to an exemplary embodiment of the different aspects of the invention, the transformation for applying to the position estimate is selected based on the geographic map used or to be used for outputting the position estimate. For instance, the mobile device or a user thereof is using or has selected a specific geographic map for displaying the environment. If now a position estimate is determined based on the radio map, a transformation can be selected based on this geographic map which is being used or going to be used, so that the correct dedicated transformation is used.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

- Fig. 1: is a block diagram of a system with exemplary apparatuses according to the invention;
- Fig. 2: is a block diagram of an exemplary apparatus according to the different aspects of the invention;
- Fig. 3: is a block diagram of an exemplary mobile device according to the different aspects of the invention;
- Fig. 4a: is a flow chart illustrating an example embodiment of a method according to the invention;
- Fig. 4b: is an exemplary illustration of a scenario for identifying shared points in order to determine a transformation;
- Fig. 5: is a flow chart illustrating an example embodiment of a method according to the invention; and
- Fig. 6: is a schematic illustration of examples of tangible storage media according to the invention.

### DETAILED DESCRIPTION OF EXAMPLE EMBODIMENTS OF THE INVENTION

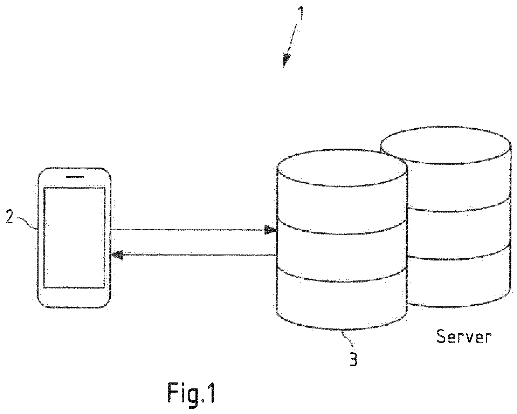

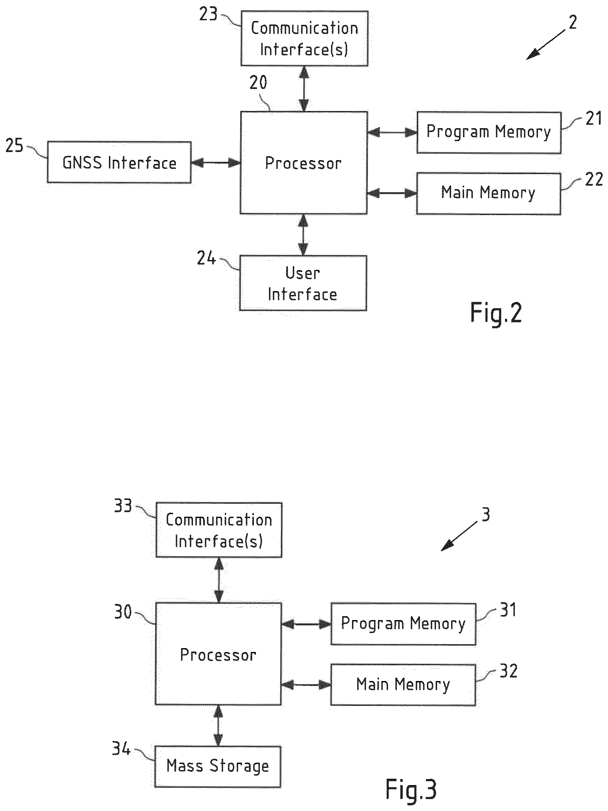

Fig. 1 is a block diagram of a system 1 of a mobile device 2 and a server 3, which may both be exemplary embodiments of an apparatus according to the invention and which may separately or together perform exemplary embodiments of the methods according to the invention. The details of mobile device 2 and server 3 are described with respect to Fig. 2, which is an exemplary block diagram of the mobile device 2 of Fig. 1, and Fig. 3, which is an exemplary block diagram of the server 3 of Fig. 1.

For instance, the mobile device 2 may be a part of or may be a cellular phone, a personal digital assistant, a laptop computer, a tablet computer or a wearable.

In particular, mobile device 2 may be used for taking radio measurements of radio signals of its environment and for obtaining position estimates of the mobile device.

Therein, the mobile device 2 may be used in the training stage of a positioning solution. For this, the mobile device 2 may automatically obtain the radio measurements and the position estimate so as to take part in a crowdsourcing process with a very large plurality of other mobile devices. Alternatively, the mobile device 2 obtains position estimates through manual inputs of the user of the mobile device 2. Thus, mobile device 2 is an exemplary device used for either manually collecting radio fingerprints or crowdsourcing radio fingerprints (and thus radio map data). The mobile device 2 may send collected fingerprints to server 3, which obtains the fingerprints for generating a radio map.

Also, mobile device 2 is an example of a mobile device which is positioned based on a radio map as described herein. For this, the mobile device 2 may likewise observe its radio environment and the radio signals and take radio measurements. Based on these radio measurements and a radio map, the mobile device 2 and/or the server 3 may then be able to determine the position of the mobile device 2.

Server 3 may be a server located remote from mobile device 2. Server 3 may also comprise multiple devices and/or may be realized as a computer cloud, for instance. Server 3 may in particular store manually collected and crowdsourced radio fingerprints received from mobile devices, such as mobile device 2. Server 3 may in particular generate and update radio maps based on received radio fingerprints. Also, server 3 may distribute generated radio maps to mobile devices or determine positioning estimates of mobile devices based on generated radio maps, when a such a request is received from a mobile device.

Turning now to Fig. 2, the mobile device 2 may generally be configured to determine position information, e.g. based on signals from a Global Navigation Satellite System (GNSS) and/or other sensors of the mobile device, such as inertial sensors, a magnetometer, and/or a barometer. However, such a determination may still be challenging, in particular for indoor situations. For instance, there may be no reception of GNSS signals, the GNSS signals may be too weak in order to get reliable location information or the GNSS signals may suggest a reliable position estimate while in fact the quality is poor.

In case mobile device 2 is used in the training stage of a positioning solution, the mobile device 2 is also capable of taking radio measurements of its radio environment. In the training stage, the radio measurements, together with position information (e.g. automatically obtained or manually input), may be sent by as radio fingerprints to a server. These and other capabilities of the mobile device 2 will also be described below.

In case the mobile device 2 is used in a positioning stage of a positioning solution (i.e. the mobile device is the device to be positioned), the mobile device 2 is also capable of taking radio measurements of its radio environment. Together with a radio map, these measurements may allow for determining the position of the mobile device. This may be done either by the mobile device itself (having obtained the radio map) or by a remote server (having obtained the radio measurements taken by the mobile device). However, this position estimate will typically be based on the coordinate system of the used radio map, as will be explained in more detail further below.

The mobile device 2 comprises a processor 20. Processor 20 may represent a single processor or two or more processors, which are for instance at least partially coupled, for instance via a bus. Processor 20 executes a program code stored in program memory 21 (for instance program code causing mobile device 2 to perform embodiments of the method according to the invention (or parts thereof), when executed on processor 20), and interfaces with a main memory 22. Some or all of memories 21 and 22 may also be included into processor 20. One of or both of memories 21 and 22 may be fixedly connected to processor 20 or at least partially removable from processor 20, for instance in the form of a memory card or stick. Program memory 21 may for instance be a nonvolatile memory. It may for instance be a FLASH memory (or a part thereof), any of a ROM, PROM, EPROM and EEPROM memory (or a part thereof) or a hard disc (or a part thereof), to name but a few examples. Program memory 21 may also comprise an operating system for processor 20. Program memory 21 may for instance comprise a first memory portion that is fixedly installed in mobile device 2, and a second memory portion that is removable from mobile device 2, for instance in the form of a removable SD memory card. Main memory 22 may for instance be a volatile memory. It may for instance be a RAM or DRAM memory, to give but a few non-limiting examples. It may for instance be used as a working memory for processor 20 when executing an operating system and/or programs. One or more radio fingerprints that are observed by mobile device 2 may for instance be stored in program memory 21 and or main memory 22.

Processor 20 further controls a communication interface 23 configured to receive and/or output information. For instance, communication interface 23 may be configured to send and/or receive data to/from server 3. Mobile device 2 may be configured to communicate with server 3 of system 1 (see Fig. 1). This may for instance comprise sending information such as radio measurements taken or radio fingerprints observed by mobile device 2 to server 3. The communication may for instance be based on a (e.g. partly) wireless connection. The communication interface 23 may thus comprise circuitry such as modulators, filters, mixers, switches and/or one or more antennas to allow transmission and/or reception of signals, e.g. for the communication with server 3. In embodiments of the invention, communication interface 23 is inter alia configured to allow communication according to a 2G, 3G, 4G and/or 5G cellular communication system and/or a non-cellular communication system, such as for instance a WLAN network. Nevertheless, the communication route between mobile device 2 and server 3 may equally well at least partially comprise wire-bound portions. For instance, server 3 may be connected to a back-bone of a wireless communication system via a wire-bound system such as for instance the internet.

Processor 20 further controls a user interface 24 configured to present information to a user of mobile device 20, such as a position estimate. For this, the user interface may in particular comprise an output device, such as a display, e.g. a touch screen, for presenting a geographic map (or a part thereof) to the user. A position estimate may then be presented to the user via the output device of the user interface 24 by indicating the position estimate on the geographic map. User interface 24 may further be configured to receive information from such a user, such as manually input position fixes or the like. User interface 24 may for instance be the standard user interface via which a user of mobile device 2 controls other functionality thereof, such as making phone calls, browsing the Internet, etc.

Processor 20 may further control a GNSS interface 25 configured to receive positioning information of an GNSS such as Global Positioning System (GPS), Galileo, Global Navigation Satellite System (i.e. "Globalnaja Nawigazionnaja Sputnikowaja Sistema", GLONASS) and Quasi-Zenith Satellite System (QZSS).

The components 21-25 of mobile device 2 may for instance be connected with processor 20 by means of one or more serial and/or parallel busses.

Turning now to Fig. 3, an exemplary block diagram of server 3 of Fig. 1 is shown. Similarly to Fig. 2, server 3 comprises a processor 30. Processor 30 may represent a single processor or two or more processors, which are for instance at least partially coupled, for instance via a bus. Processor 30 executes a program code stored in program memory 31 (for instance program code causing server 3 to perform embodiments of the method according to the invention (or parts thereof), when executed on processor 30). Processor 30 further interfaces with a main memory 32 (for instance acting as a working memory) and a mass storage 34, which may for instance receive and store a plurality of radio fingerprints acquired by mobile devices and generated radio maps. Further, mass storage 34 may store a plurality of transformations transforming coordinates in a coordinate system of a radio map into coordinates in a coordinate system of a respective geographic map.

Processor 30 further controls a communication interface 33 configured to receive and/or output information. For instance, server 3 may be configured to communicate with mobile device 2 of system 1, as already described with respect to Figs. 1 and 2.

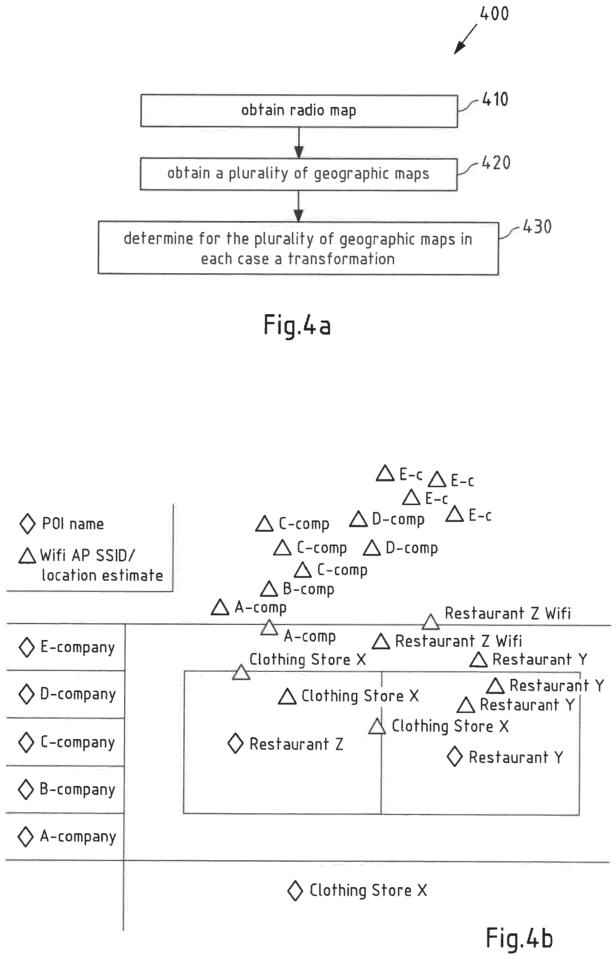

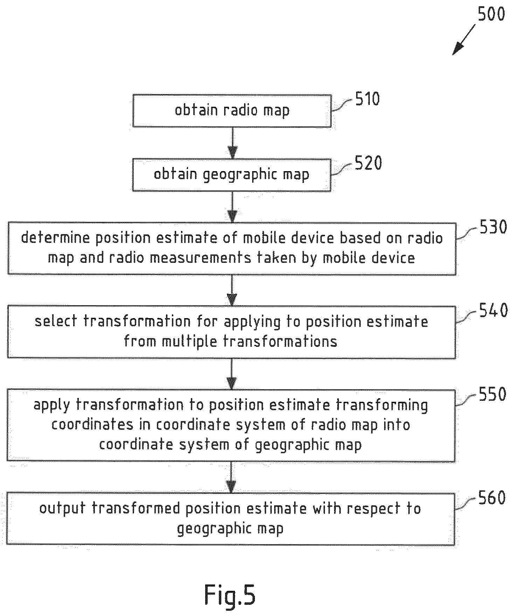

Turning now to Figs. 4a, 4b and 5, flow charts 400 and 500 illustrate exemplary methods of the invention in more detail. For illustrative purposes, the following example will assume that the geographic map is an indoor map of a building. However, it can be readily understood that the explanations are also applicable to other kinds of geographic maps and structures.

A key idea is to understand that each indoor map has its own coordinate system which is defined by the combination of using a particular reference system and the accuracy of the indoor map's alignment. Therefore, the present approach suggests compensating the differences between the coordinate system of the radio map and coordinate system of the indoor map by estimating the coordinate transformation between the coordinate system of the radio map and that of the indoor map and applying the transformation to the position estimate.

In more detail, it is assumed that there is provided a radio map that may contain one or more different features, which may include georeferenced radio measurement samples (fingerprints), radio node SSIDs or URLs (human-readable, user-given network names or attributes), radio node location estimates, radio node coverage area estimates, radio node signal strength maps, estimation of outdoor and indoor spaces, estimated multi-layer areas and numbers of floor levels, elevators, staircases, etc.

Information such as the number of floor levels may be provided in an altitude map, created from the radio fingerprints. In one example, the altitude map is created by dividing the Earth surface into small horizontal areas and using samples hitting each area to learn the altitude distribution within that small area. In an advantageous approach for creating the altitude map, it is determined whether the distribution of the altitude samples in a certain area is unimodal or multimodal after aggregating enough altitude data. When the distribution is unimodal, the average altitude can be used as the "true" altitude value for the small horizontal area. When the distribution is multimodal, levels and their corresponding altitudes are detected and estimated. The multimodality can be detected and level altitudes estimated by applying a clustering algorithm with criteria for determining the number of clusters and checking whether the algorithm produces one or several clusters. If there is just one cluster, the distribution is considered unimodal, otherwise multimodal.

Further it is assumed that there is provided an indoor map, which may include one or more of the following: georeferenced building outlines, number of floors, walls, entrances, rooms, halls, corridors, and point-of-interest (POI) names.

The invention now enables positioning using the radio map and presenting the determined positioning estimate with respect to the indoor map, independent of the indoor map's coordinate systems, as explained in more detail below with exemplary algorithms for implementing embodiments of the methods according to the invention.

While the exemplary method of flow chart 400 of Fig. 4a may be performed by any apparatus, it is preferred that the method of Fig. 4a (as an example of the second method of the invention) is performed by a server.

A radio map is obtained (action 410) and a plurality of indoor maps (e.g. a plurality of indoor maps covering different sections or floors of a building and/or from different map providers) is obtained, as well (action 420).

Then, for the plurality of indoor maps a transformation is determined in each case (action 430). Therein, a respective transformation transforms coordinates in a coordinate system of the radio map into coordinates in a coordinate system of a respective indoor map of the plurality of indoor maps. Thus there may be a transformation associated with and/or stored for each of the indoor maps.

A respective transformation may be determined in the following way:
First, one or more shared points are determined. For this, a set of points and/or shapes is identified that can be found in both the radio map and the respective indoor map. The coordinates of the shared points are identified in the radio map coordinate system and in the indoor map coordinate system.

For this, it may be assumed that the area of the building can be roughly identified from the radio map, so that it is roughly known which area in the radio map corresponds to a certain building in the indoor map. This can be true e.g. when the coordinate differences are just due to smallish alignment errors, or when the radio map covers only small sections outside of the building footprint. Shared points can be found with multiple methods. Non limiting examples are given in the following.

One option is to determine shared points based on the building shape. The shape of the building can be determined from the radio map using e.g. the GNSS availability (GNSS availability typically implies that the area is outdoor space), floor number matching, radio node density (the density is highest inside buildings), magnetic field anomalies (these typically appear indoors), and/or received signal strength gradients (the signal attenuates drastically due to outer walls). Also, the building shape according to the chosen indoor map is obtained. Then e.g. one or more corner points of the building are identified from both maps. In another example, the respective identified building areas are filled with a dense (e.g. a 1m x 1m) regular grid for both maps, the sample means and sample covariance matrices of these point sets are determined, the focus points of the ellipses corresponding to the means and covariance matrices are determined, and the corresponding focus points are used then as shared points.

Another option is to base the determination of shared points on the business names operating in the building. For this, the radio nodes' network names (e.g. the SSIDs or URLs) are matched with the place of interest names provided by the indoor map. A shared point can be e.g. the mean of the radio node locations with network names related to a place of interest name and the center point of the place of interest area.

Fig. 4b illustrates an example scenario for this approach. In Fig. 4b, a partial footprint of a building floor is shown. Shown therein are the places of interest as taken from the indoor map (indicated with diamonds) together with the location estimates of WLAN access points with a certain SSID as taken from the radio map (indicated with triangles). The WLAN access points with the SSIDs "Clothing Store X", "Restaurant Y" "Restaurant Z Wifi" should be spatially close to the positions of the places of interest with the names "Clothing Store X", "Restaurant Y" and "Restaurant Z". Likewise, the SSIDs "A-comp" to "E-c" are probably located close to the places of interest "A-company" to "E-company", respectively. Accordingly, respective pairs (i.e. WLAN access point location in radio map on the one hand and places of interest locations in the indoor map on the other hand) can be used as shared points.

Another option is to base the determination of a transformation on identifying certain access points or path points. Examples of access/path points that can be detected from the fingerprint data of the radio map may include e.g. building or space entrances (as there is lots of parallel movement and the GNSS availability changes), corridor ends (as there is lots of parallel movement as well) or vertical access points such as elevators, escalators, staircases (as there is lots of vertical movement). With regard to an indoor map, respective access/path points are typically indicated explicitly, so that they can be directly extracted from the indoor map.

For some or each of the available indoor maps, a transformation is determined (action 430). Find a coordinate transformation that maps the positions from the radio map coordinates to the indoor map coordinates. The obtained transformation can be optimal with respect to a desired criterion. The coordinate transformation from the radio map coordinate system to the indoor map coordinate system may inter alia include translation, scaling and rotation in horizontal dimensions, and also translation and scaling or altitude-to-floor-index mapping in the vertical dimension. The optimal transformation can be the one that minimizes the sum of squared distances from the transformed radio map points to the corresponding indoor map points, for instance. In the horizontal dimensions, this transformation can be found efficiently with the following method: discretize the rotation angle space (e.g. 0°,1 °,2 °,...359 °), compute the least squares estimate for the translation and scaling (linear operations, so linear least squares method can be used) for each rotation angle, and choose the rotation angle that provides the smallest sum of squared distances.

In the example of Fig. 4b described above, the determination of a transformation may lead to a transformation comprising different transformation operations of radio map coordinates, namely a rotation counterclockwise (about 45° in this example) a translation (into the lower left direction in this example) and potentially also a scaling (a slight upscaling in this example). The transformation will then map the identified points of the radio map onto respective points of the indoor map, so that a position estimate estimated by means of the radio map can be transformed into a coordinate system used by the indoor map.

Generally, the inventive approach can be applied to horizontal or vertical or both transformations. Vertical transformations may include identifying floor index shifts and also mapping floor indices to altitudes.

One option for obtaining information on the altitude of floor levels is to estimate the absolute altitude of each floor index of an indoor map using crowdsourced data. These crowdsourced data contain tracks with 3D reference positions including absolute altitudes. Based on the altitudes, each track is divided into track sections that can, based on the altitude readings, be assumed to be in a single floor level. The horizontal shape of each track section is then compared with the indoor map geometry of each floor level. For each track section, the track section's altitude can be assigned to the floor level(s) whose horizontal geometry matches/match best with the horizontal shape of the track section.

Determined transformations may be stored by a server and provided to a mobile device e.g. if required, e.g. together with a certain indoor map, for instance.

An example of a position estimate correction with a determined transformation is now described with respect to flow chart 500 of Fig. 5.

First a radio map and an indoor map (such as an indoor map) are obtained, e.g. at a mobile device. A mobile device takes radio measurements of radio signals in its surrounding. Based on these measurements in connection with the radio map a position of the mobile device is estimated (action 530), either by the mobile device or by a remote server. A transformation, which is associated with the indoor map used or to be used by the mobile device, is then selected (action 540). The transformation is then applied to each determined position estimate (action 550). The corrected, i.e. transformed position estimate is then presented to the user of the mobile device with respect to the indoor map (action 560).

The actions of the method of flow chart 500 may be performed by the mobile device to be positioned, if all necessary data is available locally at the mobile device (also referred to as "offline positioning"). However, certain actions (such as actions 510, 530, 540 and/or 550) may also be performed by a server, if certain data (such as the radio map or the transformation) is only available at the server (also referred to as "online positioning"). Irrespective of the positioning method, the mobile device typically needs to obtain the indoor map at some and outputs the transformed position estimate (actions 520, 560).

The described approach is particularly advantageous when there are several indoor maps to be used with a single radio map for a certain region. The optimal coordinate transformation may be specific to an indoor map, an indoor map provider or to a specific structure, for instance.

As already mentioned, the described example can also be applied to an outdoor radio map and a geographical outdoor map and to other structures than buildings.

The described approach enables the use of one manually collected or crowd-sourced radio map with different geographical maps without manual calibration work. It improves the user experience of a crowd-sourcing based network positioning system with real-world maps that tend to contain errors and misalignments.

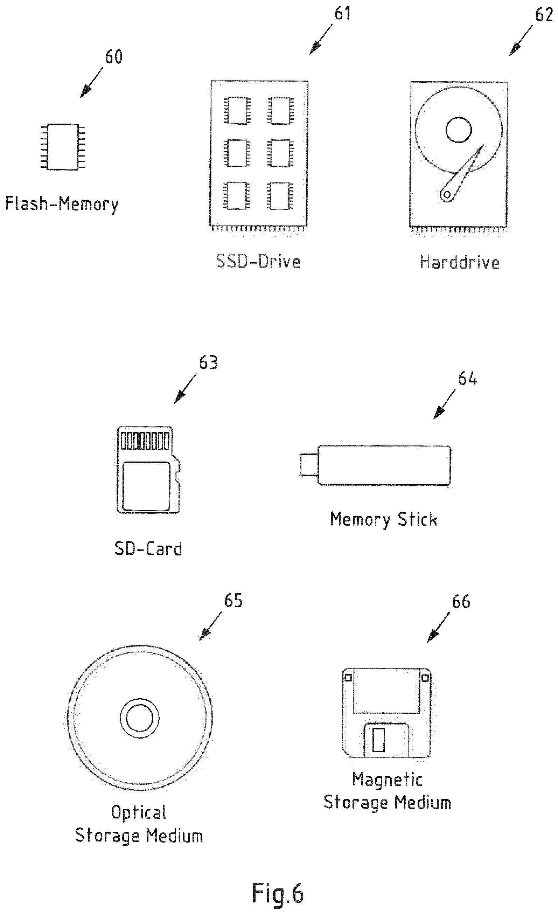

Fig. 6 is a schematic illustration of examples of tangible storage media according to the present invention that may for instance be used to implement program memory 21 of Fig. 2 and/or program memory 31 of Fig. 3. To this end, Fig. 6 displays a flash memory 60, which may for instance be soldered or bonded to a printed circuit board, a solid-state drive 61 comprising a plurality of memory chips (e.g. Flash memory chips), a magnetic hard drive 62, a Secure Digital (SD) card 63, a Universal Serial Bus (USB) memory stick 64, an optical storage medium 65 (such as for instance a CD-ROM or DVD) and a magnetic storage medium 66.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to portions of processor(s)/ software (including digital signal processor(s)), software, and memory(ies) that work together to cause an apparatus, such as a mobile phone, to perform various functions) and
(c) to circuits, such as a microprocessor(s) or a portion of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or portion of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors of Fig. 2 and 3, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method, performed by at least one apparatus (2, 3), the method comprising:
- determining (530) a position estimate of a mobile device (2) in a region, the region being covered by a radio map and a geographic map, the position estimate being determined based on the radio map and one or more radio measurements taken by the mobile device (2);
**characterized in that** the method further comprises:
- determining (430) a transformation for applying to the position estimate, wherein the determining of the transformation comprises identifying a common feature present in the radio map and the geographic map and utilizing position information of the common feature for determining the transformation, and
- applying (550) the determined transformation to the position estimate, the transformation transforming coordinates in a coordinate system of the radio map into coordinates in a coordinate system of the geographic map.

2. The method of claim 1, further comprising:
- providing the transformed position estimate for outputting with respect to the geographic map; and/or
- outputting (560) the transformed position estimate with respect to the geographic map.

3. The method of any of the preceding claims, further comprising:
- observing radio signals in the environment of the mobile device (2) and taking one or more radio measurements.

4. The method of any of the preceding claims, wherein the radio map is at least in part based on manually collected radio fingerprints and/or at least in part based on crowdsourced radio fingerprints.

5. The method according to any of the preceding claims, wherein the coordinate system of the radio map and of the geographic map use the same or a different reference system.

6. The method according to any of the preceding claims, wherein the coordinate system of the radio map and/or of the geographic map uses global coordinates.

7. The method according to any of the preceding claims, wherein the common feature pertains to one or more of:
- a geometric feature, in particular a shape, of a structure in the region;
- a place of interest, in particular a place of business, located in the region; and/or
- an access or path feature in a structure in the region.

8. The method according to any of the preceding claims, wherein the common feature pertains to a shape of a structure in the region and the identifying of a common feature comprises determining the shape of the structure in the radio map and in the geometric map, wherein the position information of the common feature preferably comprises one or more of:
- one or more points of the shape;
- one or more corner points of the shape;
- one or more center points of the shape; and/or
- one or more focus points of a curve, in particular an ellipse, derived from the shape.

9. The method according to any of claims 1 to 7, wherein the common feature pertains to a place of interest in the region and the identifying of a common feature comprises a matching of one or more radio node identifiers of the radio map with one or more names of places of interest of the geographic map, wherein the position information of the common feature preferably comprises one or more of:
- position information of one or more matching radio nodes in the radio map;
- a mean position of multiple matching radio node in the radio map;
- position information of a matching place of interest in the geographic map; and/or
- a center point of a matching place of interest in the geographic map.

10. The method according to claim 7, wherein the common feature pertains to an access or path feature in a structure in the region and the identifying of a common feature comprises detecting an access or path feature in the radio map, wherein the access or path feature preferably comprises one or more of:
- a horizontal access feature, in particular an entrance;
- a vertical access feature, in particular an elevator, an escalator or a staircase; and/or
- a corridor feature in particular a corridor end

11. The method according to any of the preceding claims, wherein the transformation includes one or more of the following transformation operations:
- a translation;
- a scaling;
- a shearing;
- a rotation; and/or
- an altitude-floor mapping.

12. The method according to any of the preceding claims, wherein the determining of the transformation comprises a mathematical optimization method.

13. The method according to any of the preceding claims, wherein the determining of the transformation comprises
- discretizing the rotation angle space;
- optimizing the transformation for transformation operations other than rotation for each discrete rotation angle; and
- choosing a rotation angle for the transformation providing an optimized transformation result.

14. The method according to any of the preceding claims, wherein the region is or comprises an indoor and/or outdoor region.

15. The method of any of the preceding claims, wherein the region is covered by multiple geographic maps, the method further comprising:
- selecting (540) a transformation for applying to the position estimate from multiple transformations, each of the multiple transformations transforming coordinates in a coordinate system of the radio map into coordinates in a coordinate system of a respective geographic map of the multiple geographic maps.

16. The method of claim 15, wherein the transformation for applying to the position estimate is selected based on the geographic map used or to be used for outputting the position estimate.

17. An apparatus (2, 3) comprising means for performing a method according to any of claims 1 to 16.

18. A computer program code, the computer program code, when executed by a processor (20, 30), causing an apparatus (2, 3) to perform the method of any of the claims 1 to 16.

19. A non-transitory computer readable storage medium (60, 61, 62, 63, 64, 65, 66), in which computer program code is stored, the computer program code when executed by a processor (20, 30) causing at least one apparatus (2, 3) to perform the method of any of claims 1 to 16.

## Patentansprüche

1. Verfahren, das von mindestens einer Einrichtung (2, 3) durchgeführt wird, wobei das Verfahren Folgendes umfasst:
- Bestimmen (530) einer Positionsschätzung einer mobilen Vorrichtung (2) in einem Gebiet, wobei das Gebiet von einer Funkkarte und einer geografischen Karte abgedeckt wird, wobei die Positionsschätzung auf der Grundlage der Funkkarte und einer oder mehrerer Funkmessungen, die von der mobilen Vorrichtung (2) durchgeführt werden, bestimmt wird;
**dadurch gekennzeichnet, dass** das Verfahren weiter Folgendes umfasst:
- Bestimmen (430) einer Transformation zur Anwendung auf die Positionsschätzung, wobei das Bestimmen der Transformation das Identifizieren eines gemeinsamen Merkmals, das in der Funkkarte und der geografischen Karte vorhanden ist, sowie das Verwenden von Positionsinformationen des gemeinsamen Merkmals zur Bestimmung der Transformation umfasst, und
- Anwenden (550) der bestimmten Transformation auf die Positionsschätzung, wobei es sich um eine Transformation handelt, die Koordinaten in einem Koordinatensystem der Funkkarte in Koordinaten in einem Koordinatensystem der geografischen Karte umwandelt.

2. Verfahren nach Anspruch 1, weiter umfassend:
- Bereitstellen der transformierten Positionsschätzung zur Ausgabe in Bezug auf die geografische Karte; und/oder
- Ausgeben (560) der transformierten Positionsschätzung in Bezug auf die geografische Karte.

3. Verfahren nach einem der vorstehenden Ansprüche, weiter umfassend:
- Beobachten von Funksignalen in der Umgebung der mobilen Vorrichtung (2) und Durchführen einer oder mehrerer Funkmessungen.

4. Verfahren nach einem der vorstehenden Ansprüche, wobei die Funkkarte mindestens teilweise auf manuell erfassten Funkfingerabdrücken basiert und/oder mindestens teilweise auf durch Crowdsourcing erfasste Radio-Fingerabdrücke basiert.

5. Verfahren nach einem der vorstehenden Ansprüche, wobei das Koordinatensystem der Funkkarte und der geografischen Karte dasselbe oder ein anderes Bezugssystem verwendet.

6. Verfahren nach einem der vorstehenden Ansprüche, wobei das Koordinatensystem der Funkkarte und/oder der geografischen Karte globale Koordinaten verwendet.

7. Verfahren nach einem der vorstehenden Ansprüche, wobei sich das gemeinsame Merkmal auf eines oder mehrere der Folgenden bezieht:
- ein geometrisches Merkmal, insbesondere eine Form, einer Struktur im Gebiet;
- ein Ort von Interesse, insbesondere ein Geschäftssitz, der sich im Gebiet befindet; und/oder
- ein Zugangs- oder Wegmerkmal in einer Struktur im Gebiet.

8. Verfahren nach einem der vorstehenden Ansprüche, wobei sich das gemeinsame Merkmal auf eine Form einer Struktur im Bereich bezieht und das Identifizieren eines gemeinsamen Merkmals das Bestimmen der Form der Struktur in der Funkkarte und in der geometrischen Karte umfasst, wobei die Positionsinformationen des gemeinsamen Merkmals vorzugsweise eines oder mehrere der Folgenden umfassen:
- einen oder mehrere Punkte der Form;
- einen oder mehrere Eckpunkte der Form;
- ein oder mehrere Mittelpunkte der Form; und/oder
- einen oder mehrere Brennpunkte einer Kurve, insbesondere einer Ellipse, die aus der Form abgeleitet sind.

9. Verfahren nach einem der Ansprüche 1 bis 7, wobei sich das gemeinsame Merkmal auf einen Ort von Interesse im Gebiet bezieht und das Identifizieren eines gemeinsamen Merkmals einen Abgleich eines oder mehrerer Funkknoten-Identifikatoren der Funkkarte mit einem oder mehreren Namen von Orten von Interesse der geografischen Karte umfasst, wobei die Positionsinformationen des gemeinsamen Merkmals vorzugsweise eines oder mehrere der Folgenden umfassen:
- Positionsinformationen eines oder mehrerer entsprechender Funkknoten in der Funkkarte;
- eine mittlere Position mehrerer entsprechender Funkknoten in der Funkkarte;
- Positionsinformationen eines entsprechenden Ortes von Interesse auf der geografischen Karte; und/oder
- einen Mittelpunkt eines entsprechenden Ortes von Interesse auf der geografischen Karte.

10. Verfahren nach Anspruch 7, wobei sich das gemeinsame Merkmal auf ein Zugangs- oder Wegmerkmal in einer Struktur im Bereich bezieht und das Identifizieren eines gemeinsamen Merkmals das Erkennen eines Zugangs- oder Wegmerkmals in der Funkkarte umfasst, wobei das Zugangs- oder Wegmerkmal vorzugsweise eines oder mehrere der Folgenden umfasst:
- ein horizontales Zugangselement, insbesondere einen Eingang;
- ein vertikales Zugangselement, insbesondere einen Aufzug, eine Rolltreppe oder ein Treppenhaus; und/oder
- ein Korridormerkmal, insbesondere ein Korridorende.

11. Verfahren nach einem der vorstehenden Ansprüche, wobei die Transformation eine oder mehrere der folgenden Transformationsoperationen umfasst:
- eine Verschiebung;
- eine Skalierung;
- eine Scherung;
- eine Drehung; und/oder
- eine Höhen-Boden-Zuordnung.

12. Verfahren nach einem der vorstehenden Ansprüche, wobei das Bestimmen der Transformation ein mathematisches Optimierungsverfahren umfasst.

13. Verfahren nach einem der vorstehenden Ansprüche, wobei das Bestimmen der Transformation umfasst
- Diskretisieren des Drehwinkelraums;
- Optimieren der Transformation für Transformationsoperationen außer der Drehung für jeden diskreten Drehwinkel; und
- Auswählen eines Drehwinkels für die Transformation, der ein optimiertes Transformationsergebnis liefert.

14. Verfahren nach einem der vorstehenden Ansprüche, wobei es sich bei dem Gebiet um einen Innenraum und/oder um einen Außenbereich handelt.

15. Verfahren nach einem der vorstehenden Ansprüche, wobei das Gebiet durch mehrere geografische Karten abgedeckt ist, wobei das Verfahren weiter Folgendes umfasst:
- Auswählen (540) einer Transformation zur Anwendung auf die Positionsschätzung aus mehreren Transformationen, wobei jede der mehreren Transformationen Koordinaten in einem Koordinatensystem der Funkkarte in Koordinaten in einem Koordinatensystem einer jeweiligen geographischen Karte der mehreren geographischen Karten transformiert.

16. Verfahren nach Anspruch 15, wobei die Transformation zur Anwendung auf die Positionsschätzung auf der Grundlage der geografischen Karte ausgewählt wird, die zur Ausgabe der Positionsschätzung verwendet wird oder verwendet werden soll.

17. Einrichtung (2, 3), umfassend Mittel zum Durchführen eines Verfahrens nach einem der Ansprüche 1 bis 16.

18. Computerprogrammcode, wobei der Computerprogrammcode, wenn er von einem Prozessor (20, 30) ausgeführt wird, bewirkt, dass eine Einrichtung (2, 3) das Verfahren nach einem der Ansprüche 1 bis 16 durchführt.

19. Nichtflüchtiges, computerlesbares Speichermedium (60, 61, 62, 63, 64, 65, 66), in dem Computerprogrammcode gespeichert ist, wobei der Computerprogrammcode, wenn er von einem Prozessor (20, 30) ausgeführt wird, bewirkt, dass mindestens eine Einrichtung (2, 3) das Verfahren nach einem der Ansprüche 1 bis 16 durchführt.

## Revendications

1. Procédé, mis en œuvre par au moins un appareil (2, 3), le procédé comprenant :
- la détermination (530) d'une estimation de position d'un dispositif mobile (2) dans une région, la région étant couverte par une carte radio et une carte géographique, l'estimation de position étant déterminée sur la base de la carte radio et d'une ou plusieurs mesures radio prises par le dispositif mobile (2) ;
**caractérisé en ce que** le procédé comprend en outre :
- la détermination (430) d'une transformation à appliquer à l'estimation de position, dans lequel la détermination de la transformation comprend l'identification d'une caractéristique commune présente dans la carte radio et la carte géographique et l'utilisation d'informations de position de la caractéristique commune pour déterminer la transformation, et
- l'application (550) de la transformation déterminée à l'estimation de position, la transformation transformant les coordonnées dans un système de coordonnées de la carte radio en coordonnées dans un système de coordonnées de la carte géographique.

2. Procédé selon la revendication 1, comprenant en outre :
- la fourniture de l'estimation de position transformée pour la délivrance en sortie par rapport à la carte géographique ; et/ou
- la délivrance en sortie (560) de l'estimation de position transformée par rapport à la carte géographique.

3. Procédé selon l'une quelconque des revendications précédentes, comprenant en outre :
- l'observation de signaux radio dans l'environnement du dispositif mobile (2) et la prise d'une ou plusieurs mesures radio.

4. Procédé selon l'une quelconque des revendications précédentes, dans lequel la carte radio est au moins en partie basée sur des empreintes radio collectées manuellement et/ou au moins en partie basée sur des empreintes radio issues du crowdsourcing.

5. Procédé selon l'une quelconque des revendications précédentes, dans lequel le système de coordonnées de la carte radio et de la carte géographique utilise le même système de référence ou un système de référence différent.

6. Procédé selon l'une quelconque des revendications précédentes, dans lequel le système de coordonnées de la carte radio et/ou de la carte géographique utilise des coordonnées globales.

7. Procédé selon l'une quelconque des revendications précédentes, dans lequel la caractéristique commune concerne un ou plusieurs parmi :
- une caractéristique géométrique, en particulier une forme, d'une structure dans la région ;
- un lieu d'intérêt, en particulier un lieu d'affaires, situé dans la région ; et/ou
- une caractéristique d'accès ou de chemin dans une structure de la région.

8. Procédé selon l'une quelconque des revendications précédentes, dans lequel la caractéristique commune concerne la forme d'une structure dans la région et l'identification d'une caractéristique commune comprend la détermination de la forme de la structure sur la carte radio et sur la carte géométrique, dans lequel les informations de position de la caractéristique commune comprennent de préférence un ou plusieurs parmi :
- un ou plusieurs points de la forme ;
- un ou plusieurs points d'angle de la forme ;
- un ou plusieurs points centraux de la forme ; et/ou
- un ou plusieurs points focaux d'une courbe, en particulier d'une ellipse, dérivés de la forme.

9. Procédé selon l'une quelconque des revendications 1 à 7, dans lequel la caractéristique commune concerne un lieu d'intérêt dans la région et l'identification d'une caractéristique commune comprend la mise en correspondance d'un ou plusieurs identifiants de nœuds radio de la carte radio avec un ou plusieurs noms de lieux d'intérêt de la carte géographique, dans lequel les informations de position de la caractéristique commune comprennent de préférence une ou plusieurs parmi :
- des informations de position d'un ou plusieurs nœuds radio correspondants dans la carte radio ;
- une position moyenne de multiples nœuds radio correspondants dans la carte radio ;
- des informations de position d'un lieu d'intérêt correspondant sur la carte géographique ; et/ou
- un point central d'un lieu d'intérêt correspondant sur la carte géographique.

10. Procédé selon la revendication 7, dans lequel la caractéristique commune concerne une caractéristique d'accès ou de chemin dans une structure de la région et l'identification d'une caractéristique commune comprend la détection d'une caractéristique d'accès ou de chemin dans la carte radio, dans lequel le caractéristique d'accès ou de chemin comprend de préférence un ou plusieurs parmi :
- une caractéristique d'accès horizontal, en particulier une entrée ;
- une caractéristique d'accès vertical, en particulier un ascenseur, un escalator ou un escalier ; et/ou
- une caractéristique de couloir, en particulier une extrémité de couloir.

11. Procédé selon l'une quelconque des revendications précédentes, dans lequel la transformation inclut une ou plusieurs des opérations de transformation suivantes :
- une translation ;
- une mise à l'échelle ;
- une transvection ;
- une rotation ; et/ou
- une cartographie altitude-sol.

12. Procédé selon l'une quelconque des revendications précédentes, dans lequel la détermination de la transformation comprend un procédé d'optimisation mathématique.

13. Procédé selon l'une quelconque des revendications précédentes, dans lequel la détermination de la transformation comprend
- la discrétisation de l'espace d'angle de rotation ;
- l'optimisation de la transformation pour les opérations de transformation autres que la rotation pour chaque angle de rotation discret ; et
- le choix d'un angle de rotation pour la transformation fournissant un résultat de transformation optimisé.

14. Procédé selon l'une quelconque des revendications précédentes, dans lequel la région est ou comprend une région intérieure et/ou extérieure.

15. Procédé selon l'une quelconque des revendications précédentes, dans lequel la région est couverte par de multiples cartes géographiques, le procédé comprenant en outre :
- la sélection (540) d'une transformation à appliquer à l'estimation de position à partir de multiples transformations, chacune des multiples transformations transformant les coordonnées dans un système de coordonnées de la carte radio en coordonnées dans un système de coordonnées d'une carte géographique respective des multiples cartes géographiques.

16. Procédé selon la revendication 15, dans lequel la transformation à appliquer à l'estimation de position est sélectionnée sur la base de la carte géographique utilisée ou à utiliser pour délivrer en sortie l'estimation de position.

17. Appareil (2, 3) comprenant des moyens pour mettre en œuvre un procédé selon l'une quelconque des revendications 1 à 16.

18. Code de programme informatique, le code de programme informatique, lorsqu'il est exécuté par un processeur (20, 30), amenant un appareil (2, 3) à mettre en œuvre le procédé selon l'une quelconque des revendications 1 à 16.

19. Support de stockage non transitoire lisible par ordinateur (60, 61, 62, 63, 64, 65, 66), dans lequel est stocké un code de programme informatique, le code de programme informatique, lorsqu'il est exécuté par un processeur (20, 30), amenant au moins un appareil (2, 3) à mettre en œuvre le procédé selon l'une quelconque des revendications 1 à 16.
